(19) Europäisches Patentamt
European Patent Office
Office européen des brevets

(11) Veröffentlichungsnummer: **0 349 844 A2**

# (12) EUROPÄISCHE PATENTANMELDUNG

(21) Anmeldenummer: 89111360.7

(51) Int. Cl.[4]: C08G 63/60

(22) Anmeldetag: 22.06.89

(30) Priorität: 05.07.88 DE 3822666

(43) Veröffentlichungstag der Anmeldung: 10.01.90 Patentblatt 90/02

(84) Benannte Vertragsstaaten: DE FR GB IT

(71) Anmelder: BAYER AG
D-5090 Leverkusen 1 Bayerwerk(DE)

(72) Erfinder: Genz, Joachim, Dr.
Bodelschwinghstrasse 16
D-4150 Krefeld(DE)
Erfinder: Eckhardt, Volker, Dr.
Bodelschwinghstrasse 14
D-4150 Krefeld(DE)
Erfinder: Idel, Karsten-Josef, Dr.
Am Schwarzkamp 38
D-4150 Krefeld(DE)
Erfinder: Casser, Carl, Dr.
Herseler Strasse 14
D-5300 Bonn 1(DE)

## (54) Thermotrope, vollaromatische Polyester mit niedriger Verarbeitungstemperatur, Verfahren zu ihrer Herstellung und ihre Verwendung zur Herstellung von Formkörpern, Filamenten, Fasern und Folien.

(57) Thermotrope Polyester mit wiederkehrenden Struktureinheiten der Formeln

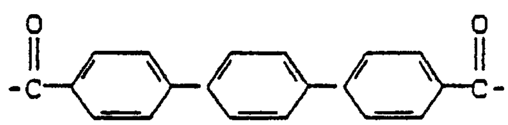

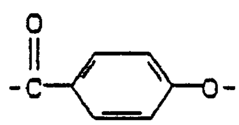

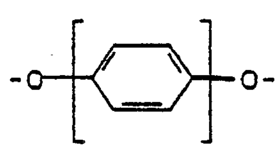

n = 1,2

und 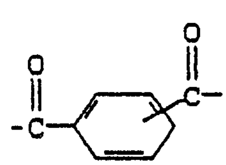

EP 0 349 844 A2

sind bei niedrigen Temperaturen verarbeitbar und dienen zur Herstellung von Formkörpern, Filamenten, Fasern und Folien.

# Thermotrope, vollaromatische Polyester mit niedriger Verarbeitungstemperatur, Verfahren zu ihrer Herstellung und ihre Verwendung zur Herstellung von Formkörpern, Filamenten, Fasern und Folien

Die Erfindung betrifft hochmolekulare, vollaromatische, thermotrope Polyester mit niedriger Verarbeitungstemperatur, ein Verfahren zu ihrer Herstellung und ihre Verwendung zur Herstellung von Formkörpern, Filamenten, Fasern und Folien.

Als "thermotrop" bezeichnet man solche Substanzen, die flüssigkristalline Schmelzen bilden. Thermotrope Polykondensate sind hinreichend bekannt. Eine Literaturzusammenfassung befindet sich z.B. in der Deutschen Patentanmeldung P 37 37 067, der DE-OS 33 25 787 und der EP-OS 134 959. Dort wird auch eine Untersuchungsmethode für den flüssigkristallinen Zustand von Polymerschmelzen beschrieben.

Formkörper, die aus flüssigkristalliner Schmelze vollaromatischer Polykondensate hergestellt werden, weisen mechanische Festigkeiten und Steifigkeiten auf, wie sie normalerweise bei unverstärkten, aus isotroper Schmelze verarbeiteten Polykondensaten nicht gefunden werden. Zur Synthese von thermotropen Polykondensaten werden üblicherweise solche Monomere eingesetzt, die zu starren, stäbchenförmigen Makromolekülen oder Makromolekülsegmenten führen. So werden z.B. flüssigkristalline Polyester, bestehend aus p-Hydroxybenzoesäure, 4,4′-Dihydroxydiphenyl und Terephthalsäure (vgl. z.B. DE-OS 2 025 971), aus 2-Hydroxy-6-naphthoesäure und p-Hydroxybenzoesäure (vgl. z.B. EP 22 344) oder aus p-Hydroxybenzoesäure, 2,6-Dihydroxynaphthalin und Terepthtalsäure (vgl. z.B. EP 1 340) beschrieben. Diese Polyester sind thermoplastisch verarbeitbar. Sie weisen jedoch üblicherweise den Nachteil auf, daß ihre Verarbeitungstemperatur relativ hoch, d.h. oberhalb von 350 °C liegt.

Die Aufgabe der vorliegenden Erfindung bestand daher darin, thermoplastisch verarbeitbare, flüssigkristalline Polykondensate bereitzustellen, die eine niedrige Erweichungstemperatur besitzen, also bei niedrigen Temperaturen aus flüssigkristalliner Schmelze verarbeitbar sind.

Überraschenderweise wurde nun gefunden, daß vollaromatische Polyester, die einkondensierte Reste von 4,4″-p-Terphenyldicarbonsäure, aromatischen Hydroxycarbonsäuren, aromatischen Dihydroxyverbindungen und gegebenenfalls weiteren aromatischen Dicarbonsäuren enthalten, die gewünschte vorteilhafte Eigenschaft besitzen.

Gegenstand der Erfindung sind daher vollaromatische, thermotrope Polyester mit wiederkehrenden Struktureinheiten der Formeln

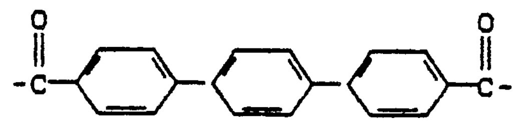

(I)

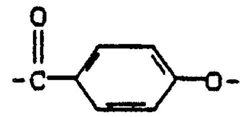

(II)

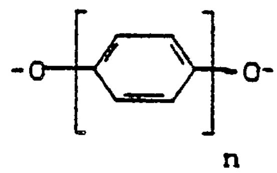

(III)

und 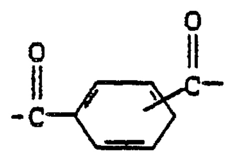 (IV),

enthaltend die einkondensierten Reste

(I) in einer Menge von 1 bis 50 Mol.-%, vorzugsweise von 5 bis 45 Mol.-%, besonders bevorzugt 10 bis 40, ganz besonders bevorzugt 15 bis 40 Mol.-% und

(II) in einer Menge von 40 bis 75 Mol.-%, bevorzugt 50 bis 75 Mol.-%, besonders bevorzugt von 60 bis 75 Mol.-%, bezogen auf die Summe der einkondensierten Reste (I), (II), (III) und (IV), mit einem Molverhältnis der einkondensierten Reste (III)/(I) + (IV) von 0,95 bis 1,05 und einem Wert n, der 1 oder 2 betragen kann.

Die Struktureinheit (I) ist abgeleitet von 4,4″-p-Terphenyldicarbonsäure oder deren reaktiven Derivaten, wie die Arylester.

Die Struktureinheit (II) ist abgeleitet von p-Hydroxybenzoesäure oder deren reaktiven Derivaten, wie die Arylester oder Acylester.

Die Struktureinheit (III) ist abgeleitet von Hydrochinon und/oder 4,4′-Dihydroxydiphenyl oder deren reaktiven Derivaten, wie die Acylester.

Die Struktureinheit (IV) ist abgeleitet von Terephthalsäure und/oder Isophthalsäure oder deren reaktiven Derivaten, wie die Arylester.

Die erfindungsgemäßen Polyester können die Einheiten aus den Resten (II), aus den Resten (I) + (III) oder aus den Resten (III) + (IV) in statistischer Verteilung oder in Blöcken enthalten. Es ist allerdings zu beachten, daß längere Blöcke dieser Einheiten die Schmelzenviskosität und den Schmelzpunkt der resultierenden Polymere stark erhöhen können.

Gegebenenfalls können die erfindungsgemäßen Polyester durch gewinkelte oder flexible Bisphenole, wie Resorcin und/oder Bisphenol-A, in einer Konzentration biz zu 10 Mol.-%, bevorzugt 1 bis 8 Mol.-%, modifiziert werden.

Als Endgruppen können die erfindungsgemäßen Polyester -COOH, -H, -OH, $-OC_6H_5$, -Acyloxy oder von Molekulargewichtsreglern (Kettenabbrechern) herrührende Reste enthalten.

Bevorzugte Kettenabbrecher sind monofunktionelle aromatische Hydroxylverbindungen, wie 4-Hydroxydiphenyl, p-Nonylphenol, 4-(1,1,3,3-Tetramethylbutyl)-phenol, ß-Naphthol und aromatische Monocarbonsäuren, wie Diphenylcarbonsäuren und Napthalincarbonsäuren. Die Kettenabbrecher können in Mengen von ca. 0,1 bis 10, bevorzugt 0,5 bis 5 Mol.-%, bei Carbonsäuren bezogen auf die Summe der Reste I, II und IV, bei Phenolen bezogen auf die Reste I, II und III, eingesetzt werden.

Es können auch verzweigende drei- oder höherfunktionelle - vorzugsweise aromatische - Monomere

wie Phloroglucin, 1,3,5-Benzoltricarbonsäure und/oder 3,5-Dihydroxybenzoesäure, bezogen auf die Summe der Reste I, II und III eingesetzt werden.

Die erfindungsgemäßen Polyester sind in den von uns erprobten Lösungsmitteln, wie p-Chlorphenol oder Phenol/1,1,2,2-Tetrachlorethan (1:1-Gewichtsverhältnis), unlöslich.

Die erfindungsgemäßen Polyester besitzen vorzugsweise eine Schmelzviskosität von weniger als 1000 Pa.s, bevorzugt 10 bis 500 Pa.s, gemessen bei einer Schergeschwindigkeit von $10^3 sec^{-1}$ unter Verwendung einer Düse mit einem Länge/Durchmesserverhältnis von 20 bei einer Temperatur von weniger als 330 °C (280 bis 330 °C).

Die erfindungsgemäßen Polyester können nach verschiedenen Verfahren hergestellt werden, z.B. durch Kondensation bzw. Umesterung der von den Resten I, II, III und IV abgeleiteten Hydroxycarbonsäuren, Diphenolen sowie Dicarbonsäuren oder ihrer reaktionsfähigen Derivate und anschließende Polykondensation (vgl. R. W. Lenz, "Synthetic routes to liquid crystalline polymers" in: Recent Advances in Liquid Crystalline Polymers, Elseview, New York, 1985).

Beispiele für bevorzugte Ausgangsverbindungen sind ihre Arylester und ihre Acylester.

Nach einem bevorzugten Syntheseverfahren werden die niederen Acylester, vorzugsweise die Acetate der von den Resten (I) und (II) abgeleiteten Hydroxycarbonsäuren sowie der von den Resten (III) abgeleiteten Diphenole mit von den Resten (IV) abgeleiteten Dicarbonsäuren umgesetzt, wobei die Acylester auch in situ hergestellt werden können.

Diese Reaktionen können in der Schmelzphase durchgeführt werden; möglich ist jedoch auch die Reaktion in Gegenwart eines flüssigen, wärmeüberleitenden Mediums, das einen hohen Siedepunkt hat (vgl. DE-OS 20 25 971).

Die Reste (I), (II), (III) und (IV) werden im Verhältnis der Ausgangskomponenten in den Polyester eingebaut.

Es kann zweckmäßig sein, sowohl die Kondensations- bzw. Umesterungsreaktionen als auch die Polykondensationsreaktionen katalytisch zu beschleunigen. Derartige Katalysatoren sind bekanntlich z.B. Lewis-Säuren und Halogenwasserstoffsäuren; Oxide, Hydride, Hydroxide, Halogenide Alkoholate, Phenolate, Salze anorganischer oder organischer Säuren (vorzugsweise Carbonsäuresalze), Komplexsalze oder Mischsalze der Erdalkalimetalle, wie Magnesium, Calcium; der Neongruppenelemente, wie Vanadium, Titan, Mangan, Cobalt, Nickel, Zink, Lanthan, Cer, Zirkonium oder der Elemente aus anderen Gruppen des Periodensystems, wie Germanium, Zinn, Blei und Antimon oder auch die Alkalimetalle oder Erdalkalimetalle selbst. Genannt seien insbesondere Natrium, Natriumhydroxid, Lithiumacetät, Natriumacetat, Calciumacetat, Magensiumacetat, Cobaltacetat, Zinkacetat, Calciumbenzoat, Magnesiumacetylacetonat, Zinkacetonat, Vanadyl-$C_1$-$C_8$-alkoxide, Titanalkoxide wie Titantetrabutylat und Titantetrapropylat, Alkoxytitansilikate, Zirkoniumbutylat, Zirkoniumpropylat, Titantetraphenolat, Natriumphenolat, Germaniumdioxid, Antimontrioxid, Dialkyl- und Diarylzinnoxid, Dibutylzinn-diacetat, Dibutyl-dimethoxyzinn.

Die Katalysatormengen betragen vorzugsweise ca. 0,001 bis 1, insbesondere 0,01 bis 0,2 Gew.-%, bezogen auf das Gesamtgewicht der eingesetzten Monomeren.

Die erfindungsgemäßen Polyester können bei Temperaturen von etwa 150 bis 380 °C hergestellt werden, wobei man im allgemeinen die Reaktion bei niedrigen Temperaturen beginnt und im Verlaufe der Reaktionsfortschreitung kontinuierlich die Temperatur erhöht. Bei nachlassender Reaktionsgeschwindigkeit kann ein Vakuum angelegt werden, wobei der Druck vorzugsweise kontinuierlich von Normaldruck bis ca. 0,1 mbar gesenkt wird.

Das erhaltene Produkt kann in Granulat- oder Pulverform einer Festphasennachkondensation unter vermindertem Druck bei Temperaturen von ca. 150 bis 300 °C, bevorzugt 200 bis 250 °C, unterworfen werden. Nach 1 bis 25 Stunden haben sich das Molekulargewicht erhöht und die daraus resultierenden Eigenschaften des Polyesters merklich verbessert.

Weiterer Gegenstand der Erfindung ist also ein Verfahren zur Herstellung der neuen Polyester durch Umsetzung der von dem Rest (I) abgeleiteten Dicarbonsäure mit der von der Rest (II) abgeleiteten Hydroxycarbonsäure und mit dem von dem Rest (III) abgeleiteten Diphenol oder dessen reaktiven Derivaten - die in situ erzeugt werden können - sowie mit der von dem Rest (IV) abgeleiteten Dicarbonsäure, gegebenenfalls in Gegenwart von Katalysatoren, Kettenabbrechern und Verzweigungsmitteln, bei Temperaturen von 150 bis 380 °C, gegebenenfalls unter vermindertem Druck.

Die erfindungsgemäßen thermotropen Polyester können infolge ihrer relativ geringen Schmelzviskosität vorteilhaft aus der Schmelze zu Spritzgußformteilen, Filamenten, Fasern, Bändern und Filmen verarbeitet werden, wobei durch auftretende Scherkräfte eine Molekülorientierung erzielt wird, die in hohem Maße von der Stärke der Scherkräfte beeinflußt wird. Desweiteren zeigen sie eine ausgeprägte Strukturviskosität, d.h., daß die Schmelzviskosität bei Erhöhung der Scherkräfte stark abfällt. Geeignete Verarbeitungsverfahren sind Spritzguß, Extrusion, Pultrusion, Pressen, Thermoformen und Schmelzspinnen.

Aus den erfindungsgemäßen Polyester können Formteile hoher Festigkeit und Steifigkeit, guter Zähigkeit -insbesondere im Bereich tiefer Temperaturen - hoher Bruchdehnung und großer Dimensionsstabilität hergestellt werden. Da die Polyester weiterhin hohen Chemikalienresistenz und gute Flammwidrigkeit aufweisen, eignen sie sich bevorzugt zur Herstellung von

- Umhüllungen von Lichtwellenleitern,
- elektrotechnischen Artikeln wie Isolatoren, Leiterplatten für gedruckte Schaltungen, Steckkontakten, Umhüllungen für integrierte Schaltungen, Armaturenteilen,
- Teilen chemisch-technischer Anlagen wie Rohren, Behälterauskleidungen, Rotoren, Gleitlagern, Dichtungen, Füllkörpern,
- Teilen medizinisch-technischer Geräte und Bauteilen von Klimaanlagen sowie Ventilteilen.

Die erfindungsgemäßen Polyester können aber auch als Überzugs- und Beschichtungsmaterial (pulverförmig oder dispergiert) verwendet werden. Auch zur Herstellung verstärkter oder gefüllter Formmassen mit einer Verstärker-und/oder Füllstoffgehalt von 5 - 65 Gew.-%, bezogen auf verstärkte und/oder gefüllte Formmassen, sind sind sie bestens geeignet. Geeignete Verstärkungs-und Füllstoffe sind bekannt und z. B. beschrieben in DE-OS 3 118 526. Bevorzugte Verstärkungsstoffe sind Glasfasern. Bevorzugte Füllstoffe, die auch verstärkend wirken können, sind Glaskugeln, Glimmer, Silikate, Quarz, Talkum, Titandioxid und Wollastonit.

Weiterer Gegenstand der Erfindung ist also die Verwendung der neuen Polyester zur Herstellung von Formkörpern, Filamenten, Fasern und Filmen. Darüber hinaus sind Gegenstand der Erfindung Formmassen auf Basis der erfindungsgemäßen Polyester, die 5 bis 65 Gew.-%, bezogen auf die verstärkte und/oder gefüllte Formmasse, eines Verstärkungs- und/oder Füllstoffes enthalten.

## Beispiele

Die Untersuchung auf thermotropes flüssigkristallines Verfahren erfolgte nach dem in der DE-OS 33 25 787 beschriebenen Verfahren. Die Bestimmung der Erweichungstemperatur erfolgte auf einem Heinztischmikroskop der Fa. Reichert, Austria. Als Erweichungstemperatur wurde die Temperatur angenommen, bei der die Probe vollständig aufgeschmolzen war und eine leichtbewegliche Schmelze bildete.

## Vergleichsbeispiel 1

Herstellung eines thermotropen, vollaromatischen Polyesters aus p-Hydroxybenzosäure, Terepthalsäure und Hydrochinon.

In einen 1-1-Dreihalsrundkolben mit Rührer, Destillationsaufsatz und Stickstoff-Einleitung wurden folgende Substanzen eingewogen:

| | | | | | |
|---|---|---|---|---|---|
| 83,4 | g | ≙ | 0,604 | Mol. | p-Hydroxybenzoesäure |
| 49,5 | g | ≙ | 0,298 | Mol. | Terephthalsäure |
| 32,8 | g | ≙ | 0,298 | Mol. | Hydrochinon |
| 128,6 | g | ≙ | 1,26 | Mol. | Acetanhydrid |
| 75 | mg | ≙ | 80 | ppm | Germaniumdioxid |
| 75 | mg | ≙ | 80 | ppm | Hydrochinonsulfonsäure-Kaliumsalz |

Nach mehrmaligem Evakuieren und Belüften mit Stickstoff wurde die Apparatur im Verlauf von 30 Minuten auf 170° C aufgeheizt. Im Verlauf von weiteren 4 Stunden wurde die Temperatur stufenweise bis auf 320° C erhöht. Bei dieser Temperatur wurde ein Vakuum angelegt und der Duck kontinuierlich bis auf 0,8 mbar reduziert. Nach 25 Minuten bei diesem Vakuum wurde das Heizbad entfernt und das Produkt nach dem Abkühlen durch Zerschlagen des Kolbens isoliert. Erhalten wurde ein hellbeiger Polyester. Dieses Produkt war den untersuchten Lösemitteln, wie p-Chlorphenol oder Phenol/1,1,2,2-Tetrachlorethan (Gewichtsverhältnis 1:1) unlöslich.

Nach der oben beschriebenen Methode wurde die Erweichungstemperatur bestimmt. Der resultierende Polyester war bis 400° C unschmelzbar.

Beispiel 2

Herstellung eines erfindungsgemäßen Polyesters aus 4,4''-p-Terphenyldicarbonsäure, p-Hydroxybenzoesäure, Terephthalsäure und Hydrochinon.

In einen 1-1-Dreihalsrundkolben mit Rührer, Destillationsaufsatz und Stickstoff-Einleitung wurden folgende Substanzen eingewogen:

| | | | | | |
|---|---|---|---|---|---|
| 47,3 | g | ≙ | 0,149 | Mol. | 4,4''-p-Terephenyldicarbonsäure |
| 83,4 | g | ≙ | 0,604 | Mol. | p-Hydroxybenzoesäure |
| 24,7 | g | ≙ | 0,149 | Mol. | Terephthalsäure |
| 32,8 | g | ≙ | 0,298 | Mol. | Hydrochinon |
| 128,6 | g | ≙ | 1,26 | Mol. | Acetanhydrid |
| 75 | mg | ≙ | 80 | ppm | Germaniumdioxid |
| 75 | mg | ≙ | 80 | ppm | Hydrochinonsulfonsäure-Kaliumsalz |

Nach mehrmaligem Evakuieren und Belüften mit Stickstoff wurde die Apparatur im Verlauf von 30 Minuten auf 170 °C aufgeheizt. Im Verlauf von weiteren 4 Stunden wurde die Temperatur stufenweise bis auf 320 °C erhöht. Bei dieser Temperatur wurde Vakuum angelegt und der Druck kontinuierlich bis auf 0,8 mbar reduziert. Nach 25 Minuten bei diesem Vakuum wurde das Heizbad entfernt und das Produkt nach dem Abkühlen durch Zerschlagen des Kolbens isoliert. Erhalten wurde ein hellbeiger, faseriger Polyester. Dieses Produkt war in den untersuchten Lösemitteln, wie p-Chlorphenol oder Phenol/1,1,2,2-Tetrachlorethan (Gewichtsverhältnis 1:1) unlöslich.

Nach der oben beschriebenen Methode wurde die Erweichungstemperatur bestimmt. Sie betrug 289 °C.

Vergleichsbeispiel 3

In der im Vergleichsbeispiel 1 beschriebenen Apparatur und nach dem dort beschriebenen Verfahren werden folgende Substanzen umgesetzt:

| | | | | | |
|---|---|---|---|---|---|
| 104,3 | g | ≙ | 0,756 | Mol. | p-Hydroxybenzoesäure |
| 61,8 | g | ≙ | 0,372 | Mol. | Terephthalsäure |
| 69,3 | g | ≙ | 0,372 | Mol. | 4,4'-Dihydroxydiphenyl |
| 128,6 | g | ≙ | 1,26 | Mol. | Acetanhydrid |
| 75 | mg | ≙ | 80 | ppm | Germaniumdioxid |
| 75 | mg | ≙ | 80 | ppm | Hydrochinonsulfonsäure-Kaliumsalz |

Der Erweichungspunkt des resultierenden, thermotropen Polyesters betrug 375 °C.

Beispiele 4 - 17

In der in Beispiel 2 beschriebenen Apparatur und nach dem dort erläuterten Verfahren wurden weitere Polyester hergestellt. Die Zusammensetzung der Produkte sowie die Ergebnisse der Bestimmung der Erweichungstemperatur sind in der folgenden Tabelle aufgeführt:

| Bsp. Nr. | pHB*) Mol% | TDC*) Mol% | TS*) Mol% | IS*) Mol% | HY*) Mol% | DOD*) Mol% | EP**) °C |
|---|---|---|---|---|---|---|---|
| 4 | 67 | 27 | 6 | -- | 33 | -- | 210 |
| 5 | 67 | 33 | -- | -- | 33 | -- | 180 |
| 6 | 67 | 16,5 | 16,5 | -- | -- | 33 | 211 |
| 7 | 67 | 27 | 6 | -- | -- | 33 | 211 |
| 8 | 67 | 33 | -- | -- | -- | 33 | 195 |
| 9 | 67 | 16,5 | 16,5 | -- | 11 | 22 | 208 |
| 10 | 67 | 16,5 | 16,5 | -- | 16,5 | 16,5 | 203 |
| 11 | 67 | 22 | 11 | -- | 22 | 11 | 247 |
| 12 | 75 | 20 | -- | 5 | -- | 25 | 228 |
| 13 | 75 | 25 | -- | -- | -- | 25 | 215 |
| 14 | 75 | 20 | -- | 5 | 25 | -- | 230 |
| 15 | 75 | 25 | -- | -- | 25 | -- | 109 |
| 16 | 75 | 20 | -- | 5 | 12,5 | 12,5 | 203 |
| 17 | 75 | 25 | -- | -- | 12,5 | 12,5 | 196 |

*) pHB = p-Hydroxybenzoesäure
TDC = 4,4″-p-Terphenyldicarbonsäure
TS = Terephthalsäure
IS = Isophthalsäure
HY = Hydrochinon
DOD = 4,4′-Dihydroxydiphenyl
EP = nach der oben beschriebenen Methode bestimmte Erweichungstemperatur

## Ansprüche

1. Thermotrope, vollaromatische Polyester mit wiederkehrenden Struktureinheiten der Formeln

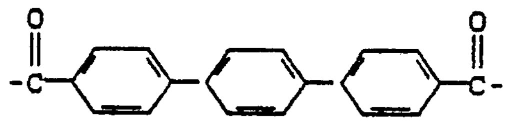

(I)

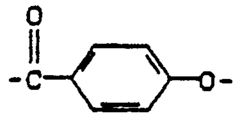

(II)

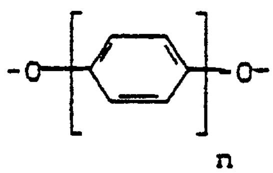

(III)

und

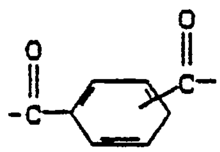

(IV),

enthaltend die einkondensierten Reste
(I) in einer Menge von 1 bis 50 Mol.-% und
(II) in einer Menge von 40 bis 75 Mol.-%,
bezogen auf die Summe der einkondensierten Reste (I) bis (IV), mit einem Molverhältnis der einkondensierten Reste (III)/(I) + (IV) von 0,95 bis 1,05 und einem Wert n, der 1 oder 2 betragen kann,

2. Polyester nach Anspruch 1, dadurch gekennzeichnet, daß sie die einkondensierten Reste
(I) in einer Menge von 5 bis 45 Mol.-%,
bezogen auf die Summe der einkondensierten Reste (I) bis (IV), enthalten.

3. Polyester nach Ansprüchen 1 und 2, dadurch gekennzeichnet, daß sie die einkondensierten Reste
(I) in einer Menge von 10 bis 40 Mol.-%,
bezogen auf die Summe der einkondensierten Reste (I) bis (IV), enthalten.

4. Polyester nach Ansprüchen 1 bis 3, dadurch gekennzeichnet, daß sie die einkondensierten Reste
(II) in einer Menge von 60 bis 75 Mol.-%,
bezogen auf die Summe der einkondensierten Reste (I) bis (IV), enthalten.

5. Verfahren zur Herstellung der neuen Polyester nach Ansprüchen 1 bis 4, dadurch gekennzeichnet, daß man die vom Rest (I) abgeleitete Dicarbonsäure mit der von dem Rest (II) abgeleiteten Hydroxycarbonsäure sowie mit den von den Resten (III) und (IV) abgeleiteten Diphenolen und Dicarbonsäuren, gegebenenfalls in Gegenwart von Katalysatoren, Kettenabbrechern und Verzweigungsmitteln, bei Temperaturen von 150 bis 380°C, gegebenenfalls unter vermindertem Druck, umsetzt.

6. Verfahren nach Anspruch 5, dadurch gekennzeichnet, daß sich der Umsetzung eine Festphasennachkondensation anschließt.

7. Verwendung der Polyester nach Ansprüchen 1 bis 4 zur Herstellung von Formkörpern, Filamenten, Fasern und Folien.

8. Formmassen auf Basis der Polyester nach Ansprüchen 1 bis 4, dadurch gekennzeichnet, daß sie 5 bis 65 Gew.-% eines Verstärkungs- und/oder Füllstoffes, bezogen auf die verstärkte und/oder gefüllte Formmasse, enthalten.